# FASCICULE DE BREVET EUROPEEN

(11) **EP 4 378 288 B1**
(45) Date de publication et mention de la délivrance du brevet: **17.06.2026**
(21) Numéro de dépôt: 23212947.8
(22) Date de dépôt: 29.11.2023
(51) Int. Cl.: A01B 59/00, A01B 59/042, A01B 63/32, A01B 71/06

(54) **DISPOSITIF DE TIMON MODULABLE**
MODULIERBARE DEICHSELVORRICHTUNG
ADJUSTABLE TOW BAR DEVICE

(30) Priorité: 29.11.2022 FR 2212511
(43) Date de publication de la demande: 05.06.2024
(73) Titulaire: Naotec, 17800 Pons (FR)
(72) Inventeur: VOUILLAT, Remy, 16360 Baignes Saint Radegonde (FR); CHAUVEAU, Stephane, 17460 Retaud (FR)
(74) Mandataire: Aquinov

(56) Documents cités:
- EP-A1- 1 347 676
- EP-A1- 3 646 714
- FR-A1- 2 904 182

## Description

La présente invention concerne le domaine technique des dispositifs de timon et plus particulièrement pour le guidage des outils agricole dans le domaine de la viticulture et/ou de l'arboriculture.

Dans le domaine ci-dessus, il est connu des dispositifs intermédiaires comprenant un timon entre un outil agricole et le véhicule automobile qui le transporte. Les outils agricoles nécessitent des moyens moteurs qui sont disposés à une extrémité du timon vers le véhicule automobile et les moyens moteurs tels qu'une pompe hydraulique doivent rester alignés avec le véhicule automobile. L'outil agricole doit être dirigé dans des allées et certaines manœuvres peuvent être délicates notamment lorsqu'il s'agit de demi-tour ou encore de changement d'allée. Les documents FR 2 904 182 A1, EP 1 347 676 A1 et EP 3 646 714 A1 montrent des dispositifs de timon connus.

L'invention vise à pallier ces inconvénients en proposant un dispositif intermédiaire modulable permettant de garder un alignement entre les moyens moteurs nécessaires à l'outil agricole et le véhicule automobile.

L'invention porte à ces fins sur un dispositif de timon modulable.

L'invention concerne un dispositif de timon modulable comprenant un châssis destiné à porter au moins un outil agricole, un timon comprenant, d'une part, une extrémité en liaison avec le châssis, et d'autre part une extrémité en liaison avec un dispositif d'attelage comportant des moyens d'attache à un véhicule automobile et un support pivot destiné à recevoir une pompe hydraulique apte à être connectée à l'outil agricole aux moyens de flexibles.

Selon l'invention, le timon comprend une liaison glissière avec le châssis permettant de moduler la longueur du timon, le support pivot est traversant du timon permettant une liaison pivot entre le dispositif d'attelage et le timon et un système de guidage des flexibles apte à guider les flexibles reliant la pompe hydraulique au châssis.

De plus, la mise en œuvre d'une liaison pivot entre la pompe hydraulique et le timon permet de pouvoir garder la pompe hydraulique toujours alignée avec le véhicule automobile lorsque le véhicule est en mouvement, et notamment lors de virage. Il est en effet nécessaire de maintenir l'alignement entre la pompe hydraulique et le véhicule automobile pour maintenir le bon fonctionnement de la pompe.

Selon une caractéristique de l'invention, le timon comprend un élément de raccord muni d'une ouverture et le support pivot traverse l'élément de raccord par ladite ouverture permettant un mouvement de rotation entre le timon et le dispositif d'attelage autour de l'axe défini par l'ouverture.

Selon une forme de réalisation de l'invention, le support pivot comprend un disque de rotation compris entre le dispositif d'attelage et la pompe hydraulique, ledit disque de rotation étant positionné entre deux anneaux de verrouillage inférieur et supérieur de l'élément de raccord, l'élément de raccord comprenant également un anneau intermédiaire de verrouillage autour du disque de rotation. La mise en œuvre d'un disque de rotation piégé dans l'élément de raccord permet de sécuriser ladite liaison pivot.

Selon une caractéristique de l'invention, le châssis comprend une portion creuse apte à loger une extrémité du timon et un vérin est apte à faire glisser le timon dans la portion creuse. Une telle portion creuse permet d'une part de faire partie de la structure du châssis qui peut également soutenir le vérin, et d'autre part de mettre en œuvre facilement une liaison glissière pour le timon lui permettant ainsi de moduler sa longueur.

Selon une autre caractéristique de l'invention, le système de guidage comprend des premiers raccords flexibles reliés à la pompe hydraulique libres en rotation sur la pompe hydraulique.

Selon une autre caractéristique de l'invention, le système de guidage comprend un support de raccord fixé sur le châssis, ledit support de raccord comprenant des deuxièmes raccords flexibles libres en rotation sur le support de raccord. La mise en œuvre d'un support de raccord fixé sur le châssis à proximité du timon permet de pouvoir moduler la longueur du timon sans interférer avec les flexibles.

Selon une forme de réalisation de l'invention, le système de guidage des flexibles comprend deux guides, un guide entrant destiné à guider les flexibles entrants et un guide sortant destiné à guider les flexibles sortants. Dissocier les flexibles entrants et sortants en les dirigeant selon deux chemins distincts permet de garder une visibilité claire sur les flexibles et leur fonction.

Selon une forme de réalisation de l'invention, les guides entrant et sortant comprennent chacun une structure tubulaire définissant un passage, lesdites structures tubulaires étant fixées sur le timon. La conception des guides par une structure tubulaire est facilement adaptable sur le dispositif. D'autres formes de réalisation gardant une ouverture pour le passage des flexibles sont compatibles dans le cadre de l'invention.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig.1] est une vue en perspective d'un dispositif de timon selon l'invention monté à un outil agricole en position allongé avec les flexibles non visibles,
[Fig.2] est une vue en perspective du dispositif de timon selon la figure 1 en position restreinte,
[Fig.3] est une autre vue en perspective du dispositif de timon selon la figure 1,
[Fig.4] est une vue du dessus du dispositif de timon selon la figure 1 montrant un plan de coupe AA',
[Fig.5] est un détail de la vue en demi-coupe selon AA' de la figure 4,
[Fig.6] est une autre vue en perspective du dispositif de timon selon la figure 1 avec les flexibles, et
[Fig.7] est une vue en perspective du dispositif de la figure 6 dans une autre position.

Il est à noter que sur ces figures les éléments structurels et/ou fonctionnels communs aux différentes variantes peuvent présenter les mêmes références.

L'invention vise à proposer un dispositif intermédiaire modulable entre un outil agricole et le véhicule automobile qui le met en mouvement.

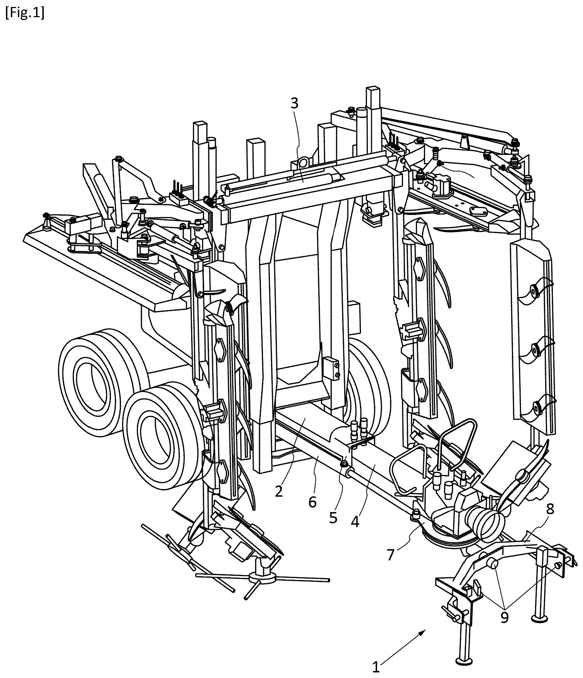

L'invention porte à ces fins sur un dispositif de timon illustré à la figure 1 et désigné dans son ensemble par la référence 1 qui est modulable. Le dispositif de timon 1 comprend un châssis 2 destiné à porter au moins un outil agricole 3 et un timon 4. Sur la figure 1, l'outil agricole 3 comprend un dispositif de coupe, d'autres outils sont également compatibles dans le cadre de l'invention.

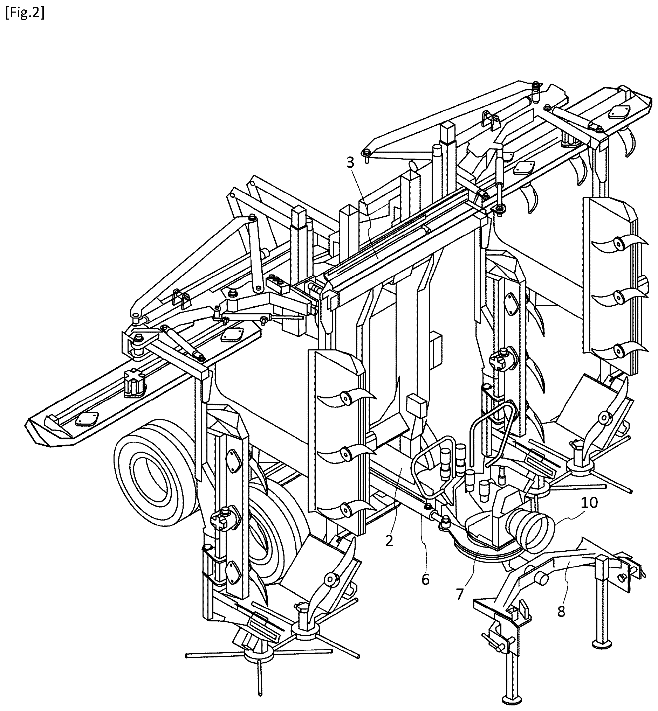

Selon l'invention, le timon 4 comprend une extrémité en liaison glissière avec le châssis 2. Pour ce faire, le châssis 2 comprend une portion creuse 5 apte à loger au moins en partie l'extrémité du timon 2. Le châssis 2 comprend également un vérin 6 apte à faire translater le timon 4 dans la portion creuse 5 du châssis 2 de manière à passer d'une position allongée telle que visible à la figure 1 à une position restreinte telle que visible à la figure 2.

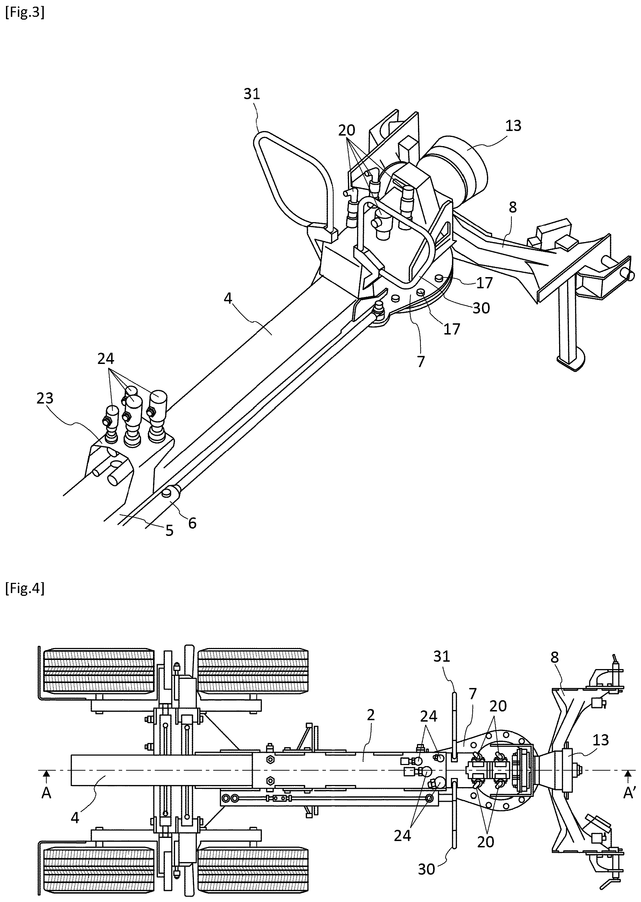

Visible notamment aux figures 3 et 4, le timon 4 comprend à son autre extrémité un élément de raccord 7 à un dispositif d'attelage 8 destiné à être fixé à un véhicule automobile tel qu'un tracteur (non représenté). Le dispositif d'attelage 8 comprend à ses fins un attelage 9 de forme allongée sensiblement perpendiculaire au timon 4 pouvant être raccordé au tracteur par exemple sur deux points d'attache. D'autres formes de configuration d'attache du dispositif de timon au véhicule automobile sont possibles dans le cadre de l'invention. Selon la forme de réalisation illustrée du dispositif de timon 1, l'attelage 9 repose sur deux pieds qui sont destinés à être enlevés lorsque le dispositif d'attelage 8 est fixé à un véhicule.

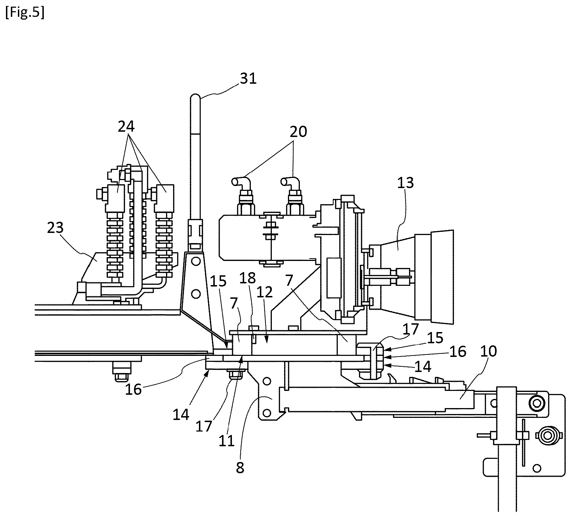

Selon la forme de réalisation illustrée, visible notamment à la figure 5, l'élément de raccord 7 à l'extrémité du timon 4 comprend une ouverture et le dispositif d'attelage 8 comprend un support pivot 10 traversant l'élément de raccord 7 formant ainsi une liaison pivot entre le dispositif d'attelage 8 et le timon 4. Selon la forme de réalisation illustrée, l'élément de raccord 7 a sensiblement la forme d'un anneau composé de plusieurs éléments décrits ci-dessous.

Le support pivot 10 représenté en coupe par des points à la figure 5 comprend un disque de rotation 11 compris entre le dispositif d'attelage 8 et le support dédié 12 une pompe hydraulique 13. L'élément de raccord 7 comprend deux anneaux de verrouillage inférieur 14 et supérieur 15. Le disque de rotation 11 est positionné entre les deux anneaux de verrouillage inférieur 14 et supérieur 15 de l'élément de raccord 7. L'élément de raccord 7 comprenant également un anneau intermédiaire 16 de verrouillage autour du disque de rotation 11. Des systèmes boulonnées 17 traversent les trois anneaux 14,15,16 de manière à verrouiller la liaison pivot. Le disque de rotation 11 est graissé et piégé dans les trois anneaux 14,15,16 de l'élément de raccord 7.

Selon la forme de réalisation illustrée du dispositif de timon 1, la pompe hydraulique 13 est fixée sur le support dédié 12 du support pivot 10 au moyen d'une vis 18. La pompe hydraulique 13 est munie de premiers raccords flexibles 20 montées en rotation libre et destinés à recevoir un ensemble de flexibles, et plus particulièrement des flexibles entrants 21 et des flexibles sortants 22 (non visibles à la figure 5).

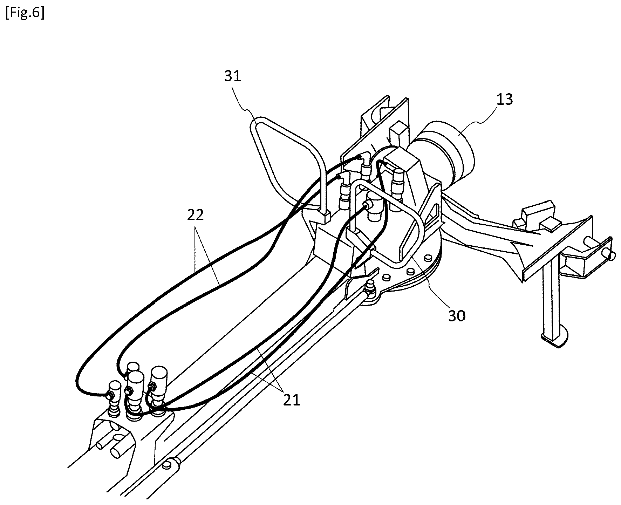

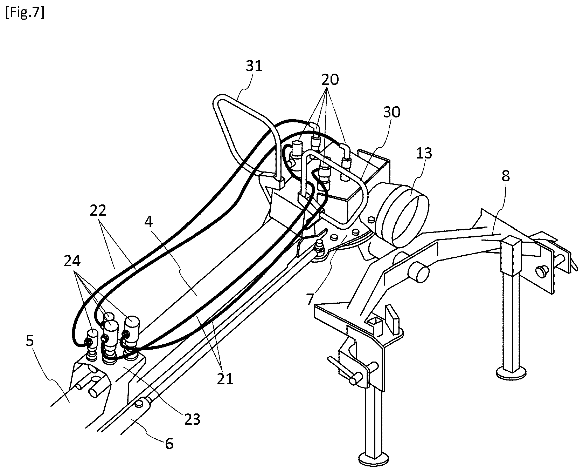

Les flexibles entrants 21 et sortants 22 de la pompe hydraulique 11 sont raccordés d'autre part à un support de raccords 23 montés sur le châssis 2 à proximité de la liaison avec le timon 4. La configuration des raccords est notamment visible aux figures 6 et 7.

Le support de raccords 23 comprend donc des deuxièmes raccords flexibles 24 destinés à recevoir les flexibles entrants 21 et sortants 22 de la pompe hydraulique 13. Les deuxièmes raccords flexibles 24 sont montées en rotation libre sur le support de raccord 23.

Le dispositif de timon 1 comprend également deux guides 30,31 situés à l'extrémité du timon 4 comprenant l'élément de raccord 7. Visible aux figures , un guide entrant 30 est apte à faire passer les flexibles entrants 21 et un guide sortant 31 est apte à faire passer les flexibles sortants 22. Les guides entrant 30 et sortant 31 ont une forme tubulaire comprenant chacun passage pour respectivement les flexibles entrants 21 et sortants 22. D'autres formes de réalisation des guides 30,31 mettant en œuvre un passage pour les flexibles 21,22 sont possibles dans le cadre de l'invention.

Le support de raccord 23 permet ensuite de faire suivre de manières fixe les flexibles entrants 21 et sortants 22 vers l'outil agricole 3.

Pour manœuvrer un dispositif de timon 1 modulable selon l'invention, un véhicule automobile raccordé au dispositif d'attelage 8 entraîne celui-ci dans son mouvement, il est alors possible de faire pivoter l'ensemble formé par le dispositif d'attelage 8 et la pompe hydraulique 12 par rapport au timon 4. Les flexibles entrants 21 et sortants 22 sont déformés lors des mouvements mais les flexibles entrants 21 et sortants 22 restent dans leurs guides entrant 30 et sortant 31 respectifs.

Bien entendu, diverses autres modifications peuvent être apportées à l'invention dans le cadre des revendications annexées.

## Revendications

1. Dispositif de timon (1) modulable comprenant un châssis (2) destiné à porter au moins un outil agricole (3), un timon (4) comprenant, d'une part, une extrémité en liaison avec le châssis (2), et d'autre part une extrémité en liaison avec un dispositif d'attelage (8) comportant des moyens d'attache à un véhicule automobile et un support pivot (10) destiné à recevoir une pompe hydraulique (13) apte à être connectée à l'outil agricole (3) aux moyens de flexibles (21,22), le timon (4) comprend une liaison glissière avec le châssis (2) permettant de moduler la longueur du timon (4), le support pivot (10) est traversant du timon (4) permettant une liaison pivot entre le dispositif d'attelage (8) destiné à être lié à la pompe hydraulique (13) et le timon (4), et un système de guidage des flexibles apte à guider les flexibles (21,22) reliant la pompe hydraulique (13) au châssis (2).

2. Dispositif de timon (1) selon la revendication précédente dans lequel le timon (4) comprend un élément de raccord (7) muni d'une ouverture et le support pivot (10) traverse l'élément de raccord (7) par ladite ouverture permettant un mouvement de rotation entre le timon (4) et le dispositif d'attelage (8) autour de l'axe défini par l'ouverture.

3. Dispositif de timon (1) selon la revendication précédente dans lequel le support pivot (10) comprend un disque de rotation (11) compris entre le dispositif d'attelage (8) et la pompe hydraulique (13), ledit disque de rotation (11) étant positionné entre deux anneaux de verrouillage inférieur (14) et supérieur (15) de l'élément de raccord (7), l'élément de raccord (7) comprenant également un anneau intermédiaire (16) de verrouillage autour du disque de rotation (11).

4. Dispositif de timon (1) selon l'une des revendications précédentes dans lequel le châssis (2) comprend une portion creuse (5) apte à loger une extrémité du timon (4) et un vérin (6) est apte à faire glisser le timon (4) dans la portion creuse (5).

5. Dispositif de timon (1) selon l'une des revendications précédentes dans lequel le système de guidage comprend des premiers raccords flexibles (20) reliés à la pompe hydraulique (13) libres en rotation sur la pompe hydraulique (13).

6. Dispositif de timon (1) selon l'une des revendications précédentes dans lequel le système de guidage comprend un support de raccord (23) fixé sur le châssis (2), ledit support de raccord (23) comprenant des deuxièmes raccords flexibles (24) libres en rotation sur le support de raccord (23).

7. Dispositif de timon (1) selon l'une des revendications précédentes dans lequel le système de guidage des flexibles (21,22) comprend deux guides (30,31), un guide entrant (30) destiné à guider les flexibles entrants (21) et un guide sortant (31) destiné à guider les flexibles sortants (22).

8. Dispositif de timon (1) selon la revendication précédente dans lequel les guides entrant (30) et sortant (31) comprennent chacun une structure tubulaire définissant un passage, lesdites structures tubulaires étant fixées sur le timon (4).

## Patentansprüche

1. Modulare Deichselvorrichtung (1), umfassend ein Fahrgestell (2), das dazu bestimmt ist, mindestens ein landwirtschaftliches Gerät (3) zu tragen, eine Deichsel (4), die einerseits ein Ende in Verbindung mit dem Fahrgestell (2) und andererseits ein Ende in Verbindung mit einer Kupplungsvorrichtung (8) umfasst, die Befestigungsmittel an einem Kraftfahrzeug und ein Drehlager (10) umfasst, das dazu bestimmt ist, eine Hydraulikpumpe (13) aufzunehmen, die geeignet ist, mit dem landwirtschaftlichen Gerät (3) mittels Schläuchen (21,22) verbunden zu werden,
wobei die Deichsel (4) eine Gleitverbindung mit dem Fahrgestell (2) umfasst, die es ermöglicht, die Länge der Deichsel (4) anzupassen, wobei das Drehlager (10) durch die Deichsel (4) dringt und eine Drehverbindung zwischen der Kupplungsvorrichtung (8) ermöglicht, die dazu bestimmt ist, mit der Hydraulikpumpe (13) und der Deichsel (4) verbunden zu werden, sowie ein Führungssystem für die Schläuche, das geeignet ist, die Schläuche (21,22) zu führen, welche die Hydraulikpumpe (13) mit dem Fahrgestell (2) verbinden.

2. Deichselvorrichtung (1) nach dem vorstehenden Anspruch, wobei die Deichsel (4) ein Verbindungselement (7) umfasst, das mit einer Öffnung versehen ist, und das Drehlager (10) durch die Öffnung das Verbindungselement (7) durchdringt, wodurch eine Drehbewegung zwischen der Deichsel (4) und der Kupplungsvorrichtung (8) um die durch die Öffnung definierte Achse ermöglicht wird.

3. Deichselvorrichtung (1) nach dem vorstehenden Anspruch, wobei das Drehlager (10) eine Drehscheibe (11) umfasst, die zwischen der Kupplungsvorrichtung (8) und der Hydraulikpumpe (13) angeordnet ist, wobei die Drehscheibe (11) zwischen zwei unteren (14) und oberen (15) Verriegelungsringen des Verbindungselements (7) positioniert ist, wobei das Verbindungselement (7) außerdem einen Zwischenverriegelungsring (16) um die Drehscheibe (11) umfasst.

4. Deichselvorrichtung (1) nach einem der vorstehenden Ansprüche, wobei das Fahrgestell (2) einen hohlen Abschnitt (5) umfasst, der geeignet ist, ein Ende der Deichsel (4) aufzunehmen, und ein Zylinder (6) geeignet ist, die Deichsel (4) in dem hohlen Abschnitt (5) gleiten zu lassen.

5. Deichselvorrichtung (1) nach einem der vorstehenden Ansprüche, wobei das Führungssystem erste Schlauchverbindungen (20) umfasst, die mit der hydraulischen Pumpe (13) frei drehbar an der hydraulischen Pumpe (13) verbunden sind.

6. Deichselvorrichtung (1) nach einem der vorstehenden Ansprüche, wobei das Führungssystem ein auf dem Fahrgestell (2) befestigtes Anschlussstück (23) umfasst, wobei das Anschlussstück (23) zweite Schlauchverbindungen (24) frei drehbar an dem Anschlussstück (23) umfasst.

7. Deichselvorrichtung (1) nach einem der vorstehenden Ansprüche, wobei das Führungssystem für die Schläuche (21,22) zwei Führungen (30,31) umfasst, eine Eingangsführung (30), die dazu bestimmt ist, die eingehenden Schläuche (21) zu führen, und eine Ausgangsführung (31), die dazu bestimmt ist, die ausgehenden Schläuche (22) zu führen.

8. Deichselvorrichtung (1) nach dem vorstehenden Anspruch, wobei die eingehende (30) und ausgehende (31) Führung jeweils eine rohrförmige Struktur umfassen, die einen Durchgang definiert, wobei die rohrförmigen Strukturen auf der Deichsel (4) befestigt sind.

## Claims

1. A modulatable drawbar device (1) comprising a frame (2) intended to carry at least one agricultural implement (3), a drawbar (4) comprising an end connected to the frame (2) and an end connected to a hitching device (8) comprising means of attachment to a motor vehicle and a pivot support (10) intended to receive a hydraulic pump (13) for connection to the agricultural implement (3) by means of hoses (21, 22),
the drawbar (4) comprises a sliding connection with the frame (2) allowing the length of the drawbar (4) to be modulated, the pivot support (10) passes through the drawbar (4) allowing a pivot connection between the hitching device (8) intended to be connected to the hydraulic pump (13) and the drawbar (4), and a hose guide system for guiding the hoses (21, 22) connecting the hydraulic pump (13) to the frame (2).

2. The drawbar device (1) according to the preceding claim, wherein the drawbar (4) comprises a connecting element (7) provided with an opening and the pivot support (10) passes through the connecting element (7) through said opening allowing rotational movement between the drawbar (4) and the hitching device (8) about the axis defined by the opening.

3. The drawbar device (1) according to the preceding claim, wherein the pivot support (10) comprises a rotation disk (11) comprised between the hitching device (8) and the hydraulic pump (13), said rotation disk (11) being positioned between two lower (14) and upper (15) locking rings of the connecting element (7), the connecting element (7) also comprising an intermediate ring (16) for locking around the rotation disk (11).

4. The drawbar device (1) according to any of the preceding claims, wherein the frame (2) comprises a hollow portion (5) for accommodating one end of the drawbar (4) and a cylinder (6) for sliding the drawbar (4) into the hollow portion (5).

5. The drawbar device (1) according to any of the preceding claims, wherein the guide system comprises first hose connections (20) connected to the hydraulic pump (13) freely rotatable on the hydraulic pump (13).

6. The drawbar device (1) according to any of the preceding claims, wherein the guide system comprises a connecting support (23) fastened to the frame (2), said connecting support (23) comprising second hose connections (24) freely rotatable on the connecting support (23).

7. The drawbar device (1) according to any of the preceding claims wherein the hose guide system (21, 22) comprises two guides (30, 31), an incoming guide (30) for guiding incoming hoses (21) and an outgoing guide (31) for guiding outgoing hoses (22).

8. The drawbar device (1) according to the preceding claim, wherein the incoming (30) and outgoing (31) guides each comprise a tubular structure defining a passage, said tubular structures being fastened to the drawbar (4).
